# EUROPEAN PATENT APPLICATION

(11) **EP 1 667 477 A1**
(43) Date of publication of application: **07.06.2006**
(21) Application number: 03818725.8
(22) Date of filing: 24.09.2003
(51) Int. Cl.: H04Q 7/34, H04Q 7/22, H04J 13/00

(54) **MOBILE STATION**

(71) Applicant: MITSUBISHI DENKI KABUSHIKI KAISHA, Tokyo 100-8310 (JP)
(72) Inventor: AIKAWA, Hideto, c/o Mitsubishi Denki K.K., Tokyo 100-8310 (JP); SHIBUYA, Akihiro, c/o Mitsubishi Denki K.K., Tokyo 100-8310 (JP)
(74) Representative: Pfenning, Meinig & Partner GbR
(86) International application number: PCT/JP2003/012171
(87) International publication number: WO 2005/029894

(57) **Abstract**

A mobile station that executes a peripheral cell search including processing (Step 1) to detect slot timings, processing (Step 2) to detect frame timings, and processing (Step 3) to identify long codes of base stations, includes a control unit (26) that controls to repeatedly execute the Step 1, Step 2, and Step 3 until a predetermined time elapses or the number of times of repeats of Step 1 control reaches a predetermined number when receiving levels of known patterns obtained as a result of Step 1 control exceed a predetermined slot timing detecting threshold, where the control unit executes at least one set of Step 1, Step 2, and Step 3 of the repeated execution processing by lowering the detection accuracy by time-shortened operations.

## Description

### TECHNICAL FIELD

The present invention relates to a mobile station to be used for mobile wireless communications, and particularly, a mobile station that searches for base stations after its power source is turned on or at the time of handover.

### BACKGROUND ART

Hereinafter, base station search processing executed in a conventional mobile station is explained. In a conventional mobile station, for example, when a predetermined number or more of base stations with predetermined or higher line quality are detected, the execution of peripheral base station detection process is interrupted. Thereby, the power consumption of the mobile station reduces.

Here, processing of the conventional mobile station is explained in detail (refer to Patent Document 1 given below). It is assumed that the conventional mobile station includes, for example, a perch channel detection judging unit, a perch channel detection executing unit, and a measuring unit.

First, the perch channel detection judging unit judges whether the mobile station is to detect a perch channel. Then, the perch channel detection executing unit detects a perch channel, in response to an instruction from the perch channel detection judging unit, and notifies the perch channel detection judging unit of the detection results. The measuring unit measures a downlink signal in response to an instruction from the perch channel detection judging unit, and notifies the perch channel detection judging unit of a level, a power-to-interference ratio, and the like obtained after the measurement.

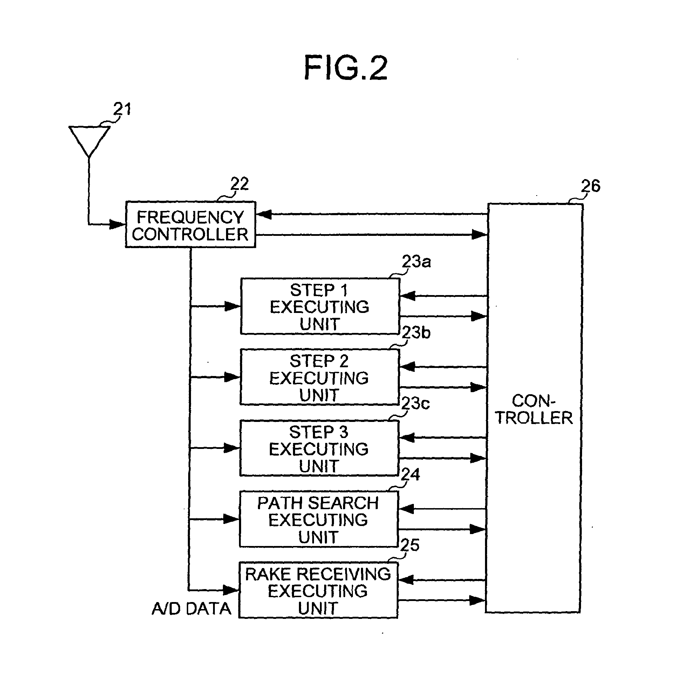

Patent Document 1: Japanese Published Unexamined Patent Application No. 2001-186561 (pages 4 and 5, Fig. 2)

However, in the conventional mobile station described in the above document, although the power consumption can be reduced to a certain level, the time to execute a useless cell search (peripheral base station detection) is long, and a desired effect of power consumption reduction cannot be obtained. Namely, when the line quality is excellent, only base stations with excellent receiving levels can be detected by lowering the detection accuracy of a peripheral cell search itself (lowering the availability ratio). However, in the base station search processing, the cell search is made without changing the availability ratio depending on the receiving levels, and the reduction in power consumption for the mobile station is less.

The present invention was made in view of these circumstances, and an object thereof is to provide a mobile station that can realize further reduction in power consumption.

### DISCLOSURE OF INVENTION

According to the present invention, a mobile station that executes a peripheral cell search including processing to detect slot timings (Step 1), processing to detect frame timings (Step 2), and processing to identify long codes of base stations (Step 3), includes a control unit that controls to repeatedly execute the Step 1, the Step 2, and the Step 3 until a predetermined time elapses or the number of repetitions of the Step 1 control reaches a predetermined number when receiving levels of known patterns obtained as a result of the Step 1 control exceed a predetermined slot timing detecting threshold, where the control unit executes at least one set of the Step 1, the Step 2, and the Step 3 of the repeated execution processing by lowering the detection accuracy by time-shortened operations.

According to the invention, based on a time set in a timer that monitors control at the Step 1, that is, the number of repetitions of the Step 1 executable in the time set in the timer, the peripheral cell search processing time reduces.

### BRIEF DESCRIPTION OF DRAWINGS

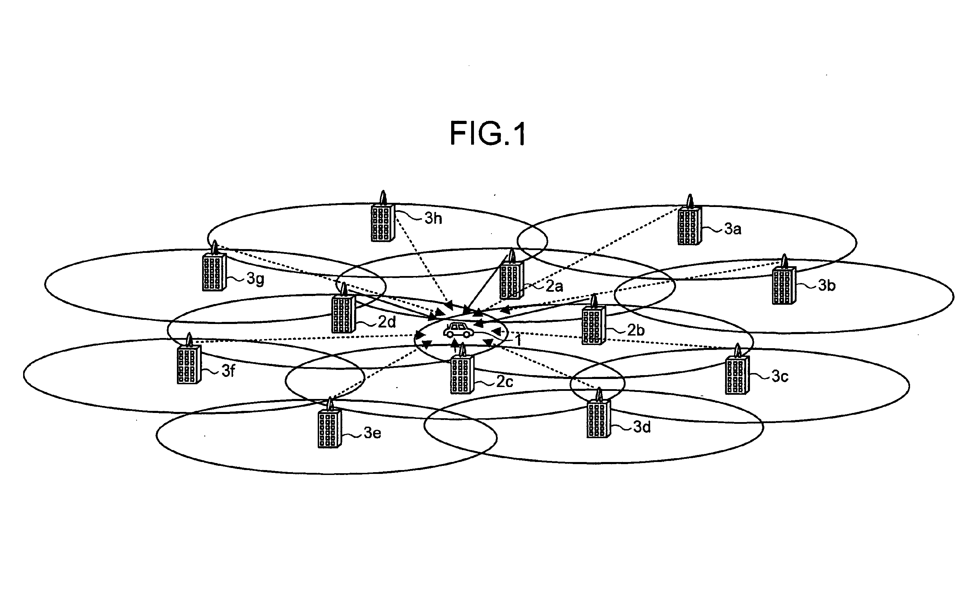

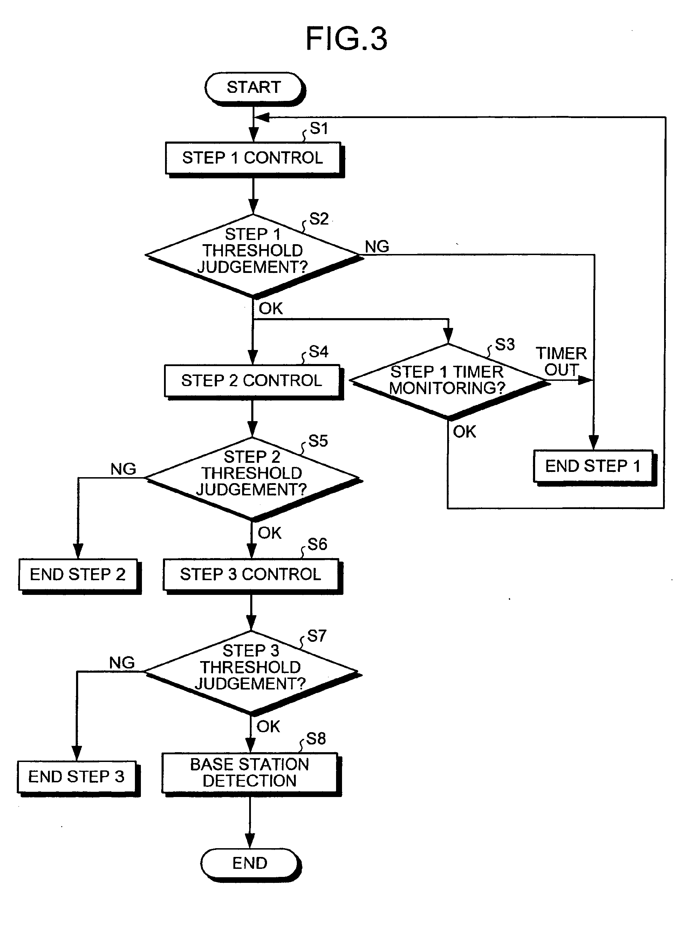

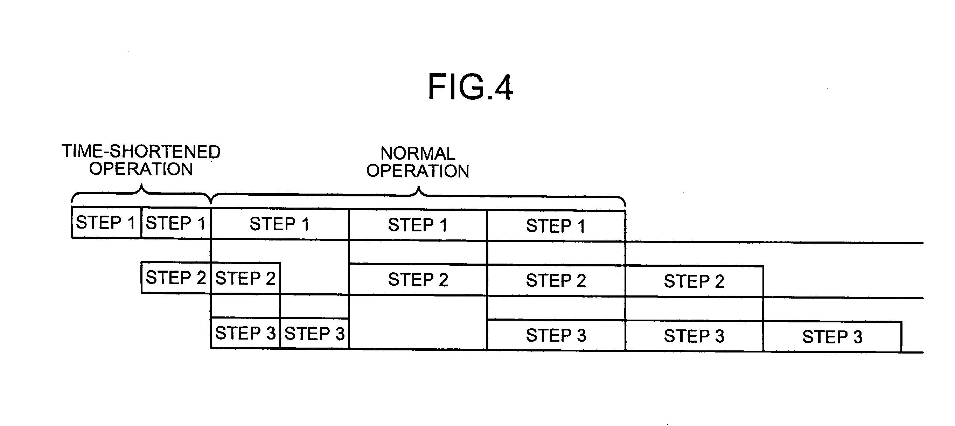

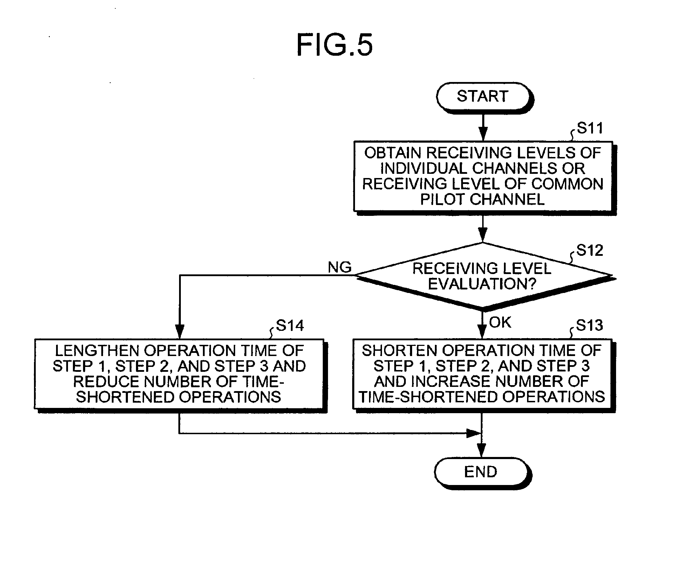

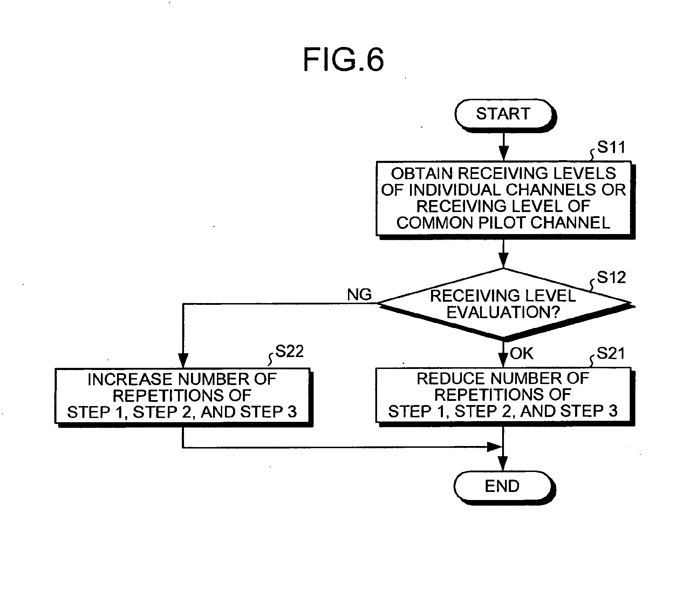

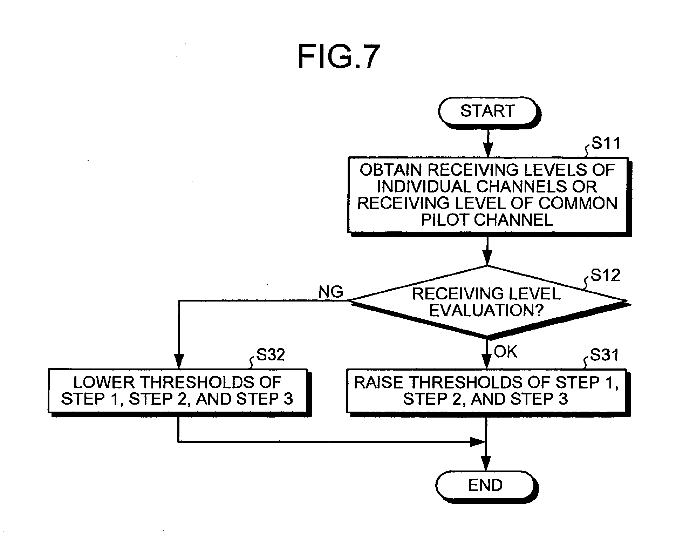

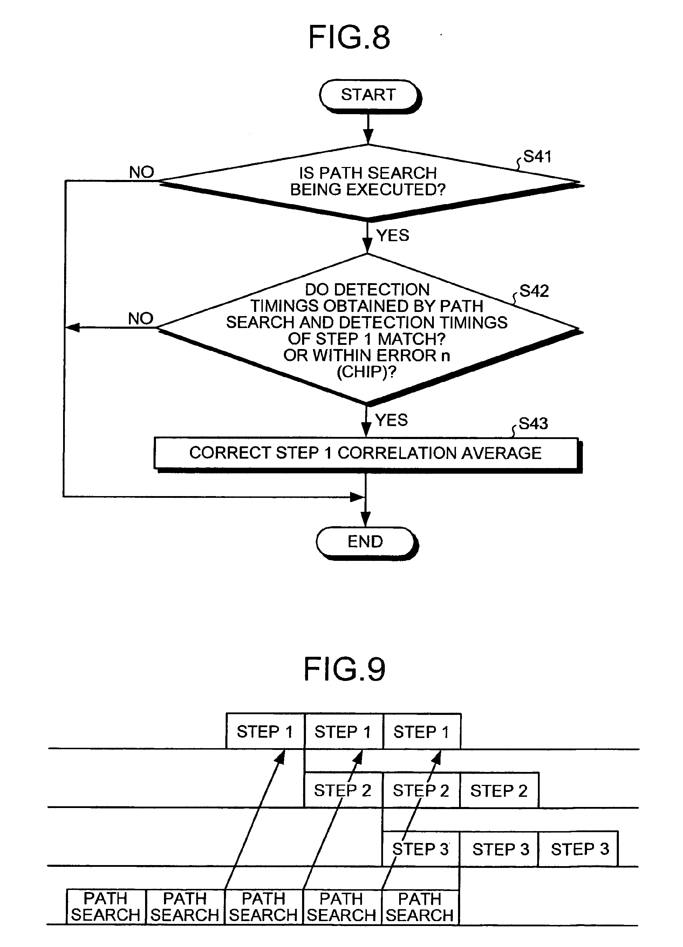

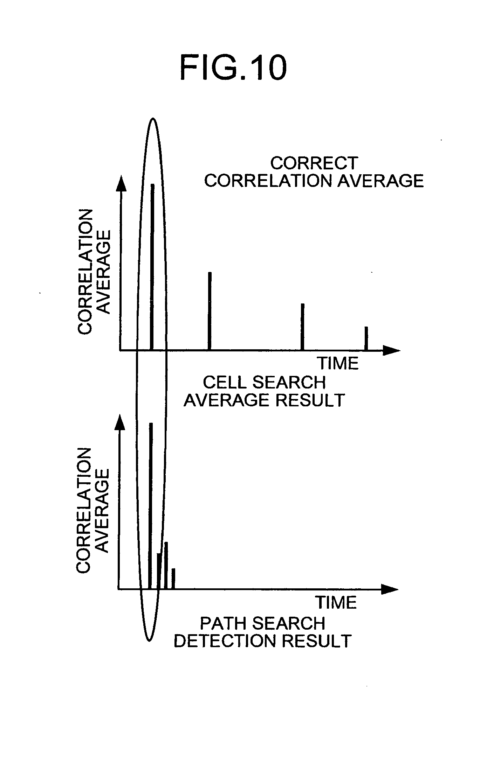

Fig. 1 is a diagram of an example configuration of a mobile communications system including a mobile station according to the present invention, Fig. 2 is a diagram of a configuration of the mobile station according to the present invention, Fig. 3 is a flowchart of base station search processing according to a first embodiment, Fig. 4 is a diagram of operations when Step 1 control is continued, Fig. 5 is a flowchart of base station search processing according to a second embodiment, Fig. 6 is a flowchart of base station search processing according to a third embodiment, Fig. 7 is a flowchart of base station search processing according to a fourth embodiment, Fig. 8 is a flowchart of base station search processing according to a fifth embodiment, Fig. 9 is a diagram of detection timings obtained by path search and detection timings obtained by Step 1, and Fig. 10 is a diagram of a process to correct a Step 1 correlation average.

### BEST MODE(S) FOR CARRYING OUT THE INVENTION

Exemplary embodiments of the present invention are explained in detail below, with reference to the accompanying drawings.

Fig. 1 is a diagram of an example configuration of a mobile communications system including a mobile station according to the present invention, and includes a mobile station 1 that can search for a plurality of base stations, base stations 2a to 2d having sufficiently high receiving levels with respect to the mobile station, and base stations 3a to 3h having low receiving levels with respect to the mobile station. In the example shown in Fig. 1, the mobile station 1 communicates with the base station 2a, and the receiving level is sufficiently high.

Fig. 2 is a diagram of a configuration of the mobile station 1 according to the present invention. The mobile station 1 includes an antenna 21, a frequency controller 22 that demodulates a signal received by the antenna 21 into a base band signal and converts it into an appropriate receiving level by executing AGC (Auto Gain Control), a Step 1 executing unit 23a that executes cell search Step 1 to detect slot timings of base stations, a Step 2 executing unit 23b that executes cell search Step 2 to detect frame timings of base stations, a Step 3 executing unit 23c that executes cell search Step 3 to identify long codes of base stations, a path search executing unit 24 that detects receiving timings and receiving levels of direct waves directly arriving from base stations and multipath waves arriving from receiving waves by being reflected by a plurality of features, a RAKE receiving executing unit 25 that demodulates a physical channel signal transmitted from a desired base station, and a controller 26 that controls the frequency controller 22, the Step 1 executing unit 23a, the Step 2 executing unit 23b, the Step 3 executing unit 23c, the path search executing unit 24, and the RAKE receiving executing unit 25.

Next, base station search processing of the present embodiment is explained in detail with reference to the drawings. Fig. 3 is a flowchart of base station search processing (control executed by the controller 26) according to a first embodiment, and in particular, control for the Step 1 executing unit 23a, the Step 2 executing unit 23b, and the Step 3 executing unit 23c. When executing the peripheral base station search (hereinafter, "cell search"), the controller 26 has already informed the frequency controller 22 of a frequency for searching base stations, and is ready for receiving a desired frequency via the antenna 21.

When executing a cell search, first, the controller 26 controls the Step 1 executing unit 23a and identifies slot timings (Fig. 1, Step S1). At this point, the Step 1 executing unit 23a performs correlation detection from known patterns transmitted by the base stations.

Next, the controller 26 calculates receiving levels of the known patterns from the correlation detection results reported by the Step 1 executing unit 23a and the AGC gains detected by the frequency controller 22, and judges the receiving levels with respect to a predetermined Step 1 threshold (Step S2). For example, when the receiving levels of the known patterns exceed the Step 1 threshold (OK at Step S2), the controller 26 confirms the timer to monitor the Step 1 control (Step S3), and unless the time runs out (OK at Step S3), the controller continues the Step 1 control. On the other hand, if the receiving levels of the known patterns are less than the Step 1 threshold (NG at Step S2), or if it is judged in the timer monitoring that the timer ran out (Timer out at Step S3), the controller stops the Step 1 control. In the present embodiment, a timer is used for monitoring the Step 1 control. However, without limiting to this, it is also allowed that the Step 1 control be monitored by counting the number of repetitions of the Step 1 control.

Operations when the Step 1 control is continued are explained in detail with reference to the drawings. Fig. 4 is a diagram of operations when the Step 1 control is continued. In the present embodiment, based on the time set in advance in the timer, that is, the number of repetitions of the Step 1 executable in the time, at least one set of the Step 1, the Step 2, and the Step 3 is executed by time-shortened operations. For example, as shown in Fig. 4, when the number of repetitions of the Step 1 is five, the processing time is shortened by lowering the peripheral cell search detection accuracy (lowering the availability ratio) for first two repetitions of the Step 1, the Step 2, and the Step 3 (see the time-shortened operation of Fig. 4). For the remaining three repetitions of the Step 1, the Step 2, and the Step 3, the peripheral cell search is executed in the normal operation time with the normal detection accuracy (see the normal operation shown in Fig. 4). Then, in the first two repetitions of peripheral cell search, base stations with high receiving levels are detected at a high speed, and in the remaining three repetitions of peripheral cell search, base stations with low receiving levels are detected with high accuracy. Thus, the processing time for the peripheral cell search in the mobile station reduces, thereby reducing the power consumption in the mobile station.

On the other hand, in the processing at Step S2, if the receiving levels of the known patterns exceed the Step 1 threshold (OK at Step S2), the controller 26 informs the Step 2 executing unit 23b of the slot timings detected by the Step 1 executing unit 23a (Step S4). Thereafter, the Step 2 executing unit 23b performs correlation detection from known patterns that are different for each slot and that are transmitted by the base stations, and detects leading timings of the frames.

Next, the controller 26 calculates receiving levels of the known patterns from the correlation detection results notified by the Step 2 executing unit 23b and the AGC gains detected by the frequency controller 22, and judges the receiving levels with respect to a predetermined Step 2 threshold (Step S5). For example, when the receiving levels of the known patterns exceed the Step 2 threshold (OK at Step S5), the controller 26 informs the Step 3 executing unit 23c of frame timings detected as a judgment result (Step S6). Then, the Step 3 executing unit 23c performs correlation detection from known patterns for each frame transmitted by the base stations, and identifies base station codes. If the receiving levels of the known patterns are less than the Step 2 threshold (NG at Step S5), the Step 2 ends.

Next, the controller 26 calculates receiving levels of the known patterns from the correlation detection results notified by the Step 3 executing unit 23c and the AGC gains detected by the frequency controller 22, and judges the receiving levels with respect to a predetermined Step 3 threshold (Step S7). For example, when the receiving levels of the known patterns exceed the Step 3 threshold (OK at Step S7), the controller 26 employs base station codes notified by the Step 3 executing unit 23c (Step S8). On the other hand, if the receiving levels of the known patterns are less than the Step 3 threshold (NG at Step S7), the controller abandons the base station codes notified by the Step 3 executing unit 23c, and ends the Step 3 control.

As described above, in the present embodiment, based on the time set in the timer that monitors the Step 1 control, that is, the number of repetitions of the Step 1 executable in the time, the peripheral cell search processing time is shortened. Thus, the power consumption in the mobile station can be significantly reduced.

Next, base station search processing according to a second embodiment is described in detail with reference to the drawings. Fig. 5 is a flowchart of base station search processing (control by the controller 26) according to the second embodiment, and herein, low power consumption is realized by using the frequency controller 22, the path search executing unit 24, and the RAKE receiving executing unit 25. The configuration of the mobile station is the same as in Fig. 2 of the first embodiment explained above. The basic processing (Steps S1 to S8) of the controller 26 is also the same as in Fig. 3 of the first embodiment explained above.

The controller 26 can monitor a receiving level of a common pilot channel of base stations within the range of the mobile station by controlling the frequency controller 22 and the path search executing unit 24. In addition, the controller can monitor receiving levels of individual channels by controlling the frequency controller 22 and the RAKE receiving executing unit 25. In the present embodiment, low power consumption is realized by using the monitoring results.

For example, when the receiving level of the common pilot channel or receiving levels of individual channels are sufficiently high, it can be judged that the probability of switching (handover) to another base station is low, and it is not necessary to detect many peripheral base stations. Therefore, the controller 26 acquires the receiving levels of the individual channels or the receiving level of the common pilot channel (Fig. 5, Step S11), and judges receiving levels of the base stations within the range of the mobile station (Step S12). If the receiving levels of the base stations within the range of the mobile station are sufficiently high (the threshold judgment) (OK at Step S12), the controller lowers the detection accuracy of the peripheral cell search (Step 1, Step 2, and Step 3) (lowers the availability ratio) to shorten the processing time and increases the number of time-shortened operations shown in Fig. 4 (the normal operations are reduced) (Step S13). Thereby, the power consumption in the mobile station can be further reduced. On the other hand, if the receiving levels of the base stations within the range of the mobile station are not sufficiently high (the threshold judgment) (NG at Step S12), the detection accuracy of the peripheral cell search (Step 1, Step 2, and Step 3) is increased (increase the availability ratio) to lengthen the processing time and the number of time-shortened operations shown in Fig. 4 is reduced (the normal operations are increased) (Step S14).

Thus, in the present embodiment, based on the receiving levels of the individual channels or the receiving level of the common pilot channel, the peripheral cell search processing time is shortened. Thereby, the power consumption in the mobile station can be reduced when the receiving levels of the base stations within the range of the mobile station are sufficiently high.

Next, base station search processing of a third embodiment is explained in detail with reference to the drawings. Fig. 6 is a flowchart of base station search processing (control by the controller 26) according to the third embodiment, and herein, as in the case of the second embodiment, low power consumption is realized by using the frequency controller 22, the path search executing unit 24, and the RAKE receiving executing unit 25. The configuration of the mobile station is the same as in Fig. 2 of the first embodiment explained above. The basic processing (Steps S1, S2, and S4 to S8) of the controller 26 is also the same as in Fig. 3 of the first embodiment explained above. Only operations different from the second embodiment explained above are explained here.

First, receiving levels of individual channels or a receiving level of a common pilot channel is obtained (Fig. 6, Step S11), and receiving levels of base stations within the range of the mobile station are judged (Step S12). For example, when the receiving levels of the base stations within the range of the mobile station are sufficiently high (the threshold judgment) (OK at Step S12), the number of repetitions of the Step 1, the Step 2, and the Step 3 is reduced (Step S21). As shown in Fig. 4, if a standard is set as 5 repetitions, by shortening the timer monitoring time at the Step S3, the number of repetitions reduces to four times, three times, and so on. Thereby, the cell search time can be shortened to reduce the power consumption in the mobile station. On the other hand, when the receiving levels of the base stations within the range of the mobile station are not sufficiently high (the threshold judgment) (NG at Step S12), the number of repetitions of the Step 1, the Step 2, and the Step 3 is increased (Step S22).

As described above, in the present embodiment, based on the receiving levels of the individual channels or the receiving level of the common pilot channel, the peripheral cell search processing time is shortened. Thereby, the power consumption in the mobile station can be reduced when the receiving levels of the base stations within the range of the mobile station are sufficiently high.

Next, base station search processing of a fourth embodiment is explained in detail with reference to the drawings. Fig. 7 is a flowchart of base station search processing (control by the controller 26) according to the fourth embodiment, and herein, as in the case of the second or the third embodiments, low power consumption is realized by using the frequency controller 22, the path search executing unit 24, and the RAKE receiving executing unit 25. The configuration of the mobile station is the same as in Fig. 2 of the first embodiment explained above. Only operations different from the second embodiment explained above are explained here.

First, receiving levels of individual channels or a receiving level of a common pilot channel is acquired (Fig. 7, Step S11), and the receiving levels of base stations within the range of the mobile station are judged (Step S12). When the receiving levels of the base stations within the range of the mobile station are sufficiently high (the threshold judgment) (OK at Step S12), thresholds of the Step 1, the Step 2, and the Step 3 are set higher than reference thresholds (Step S31). Thereby, the processing can be reduced, and accordingly, the cell search time can be shortened, and the power consumption in the mobile station reduces. On the other hand, when the receiving levels of the base stations within the range of the mobile station are not sufficiently high (the threshold judgment) (NG at Step S12), the thresholds of the Step 1, the Step 2, and the Step 3 are set lower than the reference thresholds (Step S32).

Thus, in the present embodiment, based on the receiving levels of individual channels or the receiving level of the common pilot channel, the peripheral cell search processing time is shortened. Thereby, the power consumption in the mobile station can be reduced when the receiving levels of the base stations within the range of the mobile station are sufficiently high.

Next, base station search processing of a fifth embodiment is explained in detail with reference to the drawings. Fig. 8 is a flowchart of base station search processing (control by the controller 26) according to the fifth embodiment, and herein, low power consumption is realized by using the Step 1 executing unit 23a and the path search executing unit 24. The configuration of the mobile station is the same as in Fig. 2 of the first embodiment explained above.

First, for controlling the Step 1 executing unit 23a, the controller 26 judges whether the path search is being executed (Fig. 10, Step S41). If the path search is being executed (Yes at Step S41), the controller judges whether detection timings obtained by the path search and detection timings at the Step 1 match (see Fig. 9) (Step S42). For example, if these values match, or if there is an error within ±n (chip) regulated in advance (Yes at Step S42), the controller 26 corrects the average of the correlation results of known patterns in the Step 1 executing unit 23a based on the detection timings obtained by the path search executing unit 24, as shown in Fig. 10 (Step S43).

If the path search is not being executed (No at step S41) or an error equal to or more than ±n (chip) is detected in the judgment at Step S42 (Yes at Step S42), the controller ends the processing without making correction.

Thus, in the present embodiment, when the mobile station simultaneously executes the cell search Step 1 to Step 3 and the path search, the Step 1 correlation average is corrected based on the detection timings obtained by the path search. Thereby, false detection at the Step 1 can be reduced and the total cell search executing time can be shortened, so that the power consumption in the mobile station can be reduced.

### INDUSTRIAL APPLICABILITY

As described above, the mobile station of the present invention is useful to search for base stations after the power source is turned on or at the time of handover, and in particular, suitable when line quality is very good.

## Claims

1. A mobile station that executes a peripheral cell search including processing (Step 1) to detect slot timings, processing (Step 2) to detect frame timings, and processing (Step 3) to identify long codes of base stations, comprising:
a control unit that controls to repeatedly execute the Step 1, Step 2, and Step 3 until a predetermined time elapses or the number of times of repeats of Step 1 control reaches a predetermined number when receiving levels of known patterns obtained as a result of Step 1 control exceed a predetermined slot timing detecting threshold, wherein
the control unit executes at least one set of Step 1, Step 2, and Step 3 of the repeated execution processing by lowering the detection accuracy by time-shortened operations.

2. A mobile station that executes a peripheral cell search including processing (Step 1) to detect slot timings, processing (Step 2) to detect frame timings, and processing (Step 3) to identify long codes of base stations, comprising:
a control unit that controls to increase the number of time-shortened operations to shorten processing time of the Step 1, Step 2, and Step 3 by lowering the detection accuracy within a predetermined time when a receiving level of a common pilot channel or receiving levels of individual channels of base stations within the range of the mobile station are higher than a predetermined threshold, and on the other hand, controls to reduce the number of time-shortened operations in the predetermined time when the receiving levels do not reach the threshold.

3. A mobile station that executes the peripheral cell search including processing (Step 1) to detect slot timings, processing (Step 2) to detect frame timings, and processing (Step 3) to identify long codes of base stations, comprising:
a control unit that controls to repeatedly execute the Step 1, Step 2, and Step 3 until a predetermined time elapses or the number of times of repeats of Step 1 control reaches a predetermined number when receiving levels of known patterns obtained as a result of Step 1 control exceed a predetermined slot timing detecting threshold, wherein
the control unit controls to increase the number of times of repeats of Step 1, Step 2, and Step 3 when a receiving level of a common pilot channel or receiving levels of individual channels of base stations within the range of the mobile station are higher than a predetermined threshold, and on the other hand, controls to reduce the number of times of repeats of Step 1, Step 2, and Step 3 when the receiving levels do not reach the threshold.

4. A mobile station that executes the peripheral cell search including processing (Step 1) to detect slot timings, processing (Step 2) to detect frame timings, and processing (Step 3) to identify long codes of base stations, comprising:
a control unit that controls to set judging thresholds to be used at the Step 1, Step 2, and Step 3 higher than reference thresholds when a receiving level of a common pilot channel or receiving levels of individual channels of base stations within the range of the mobile station are higher than a predetermined threshold, and on the other hand, sets the judging thresholds lower than the reference thresholds when the receiving levels do not reach the predetermined threshold.

5. A mobile station that simultaneously executes processing (Step 1) to detect slot timings and path search processing to detect receiving timings and receiving levels of direct waves or multipath waves, comprising:
a control unit that corrects a correlation average obtained by the Step 1 based on detection timings obtained by the path search processing when comparison results between the detection timings obtained by the path search processing and detection timings obtained by the Step 1 are within a predetermined error range.
